(19) Europäisches Patentamt

European Patent Office

Office européen des brevets

(11) Publication number: **0 200 247**
**A2**

# (12) EUROPEAN PATENT APPLICATION

(21) Application number: **86200527.9**

(22) Date of filing: **28.03.86**

(51) Int. Cl.4: **F23Q 7/00**

(30) Priority: **16.04.85 IT 5324085 U**

(43) Date of publication of application:
**10.12.86 Bulletin 86/45**

(84) Designated Contracting States:
**AT BE DE FR GB NL SE**

(71) Applicant: **Pramaggiore, Luigi**
**Strada Statale, 26**
**I-11010 Sarre (Aosta)(IT)**

(72) Inventor: **Pramaggiore, Luigi**
**Strada Statale, 26**
**I-11010 Sarre (Aosta)(IT)**

(74) Representative: **Robba, Eugenio et al**
**Studio "INTERPATENT" via Caboto 35**
**I-10129 Turin(IT)**

(54) **Electric device for rapidly lighting cigars or cigarettes, particularly for motor vehicles.**

(57) An electric device for rapidly lighting cigars or cigarettes, particularly for motor vehicles, having a control knob (3) mounted for sliding movement within a cylindrical casing (1) and connected to a control rod (39) acting upon a movable contact (4) to bring the latter into engagement with a further stationary contact (5) to establish electrical connection to a heating resistance (27) incorporated in a hot plate - (6) for lighting a cigar or cigarette as it is placed with its end thereagainst when the heating resistance becomes incandescent.

FIG. 2

EP 0 200 247 A2

"Electric device for rapidly lighting cigars or cigarettes, particularly for motor vehicles"

This invention relates to an electric device for rapidly lighting cigars or cigarettes, particularly for motor vehicles.

U.S. Patent No. 4,293,761 issued on October 6, 1981 to the same Applicant describes an improved cigarette lighter, particularly for motor vehicles, wherein lighting of the cigarette is obtained by actuating a tubular control knob which pushes an associated control rod to exert pressure on a pivotally mounted keeper which in turn is connected to a contact blade adapated to feed the heating resistance of the electric lighter.

However, this electric lighter has the drawback that its lighting time is relatively long and that is has no protective elements incorporated therein for interrupting the feed of power in case of a fault.

Further, the great number of parts used in the construction of this lighter, although they ensure a perfect operation thereof, reduce its competitiveness and increase production costs.

It is therefore an object of the present invention to further improve the characteristics of operation of the lighter described in the aforementioned Patent by adopting some particularly simple constructional expedients that can easily be carried out to ensure long service life and competitive production costs.

A particular advantage of the invention consists in providing a lighter whose time of lighting is much shorter than in known lighters so as to limit the time of diverting of the driver's attention from attentive driving and thus avoid possible prolonged distraction of the driver.

A further advantage of the invention consists in the insertion of a bimetal tongue into the central body of the lighting assembly so as to ensure adequate protection against excessively long incandescence due to potential incidental blocking of the lighter mechanism.

These and other objects and advantages of the invention, which will become apparent from the following description, are achieved by an improved and simplified lighter for rapidly lighting cigars or cigarettes, particularly for motor vehicles, comprising a control knob for opening and closing the electric feed circuit of a heating resistance, said control knob being mounted for sliding movement in the interior of a cylindrical metal casing, a circular reinforcement arranged in the interior of said control knob, a spring wound outwardly around said reinforcement, a metal insert arranged inwardly of said circular reinforcement, an electric heating resistance arranged in the interior of a hot plate, ceramic support members inserted in a threaded stem and locked in position thereby, a plurality of resilient tabs firmly secured to a metal disk, and a LED, characterized in that it further comprises a movable contact mounted for longitudinal sliding movement along a rib bent out of said cylindrical metal casing, said movable contact being formed by a metal rod firmly secured with one end to said control knob and forming a seat for said movable contact with its other end, and a further contact connected to said electrical heating resistance and arranged therebelow.

Further details and characteristics of the invention will appear from the following description, with reference to the accompanying drawings given by way of example only, from which it will be understood how the present invention can be carried out, the features appearing in the specification and drawings being a part thereof.

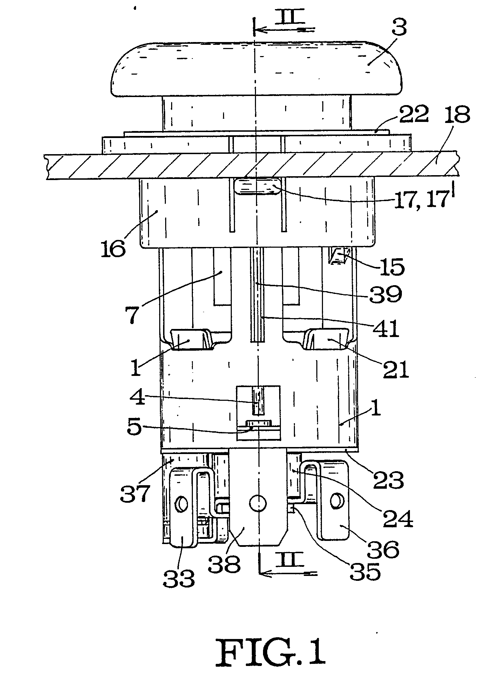

Fig. 1 is a front view of a lighter according to the invention;

Fig. 2 is a section taken on the line II-II in Fig. 1, and

Fig. 3 is a plan view of the lower portion of the lighter of Fig. 1.

With reference to the above figures, the electric lighter for lighting cigars or cigarettes according to the invention comprises a cylindrical metal casing 1 provided with peripheral openings 20, 20', 20" for lightening and ventilation purposes. A circular knob 3 is arranged upwardly of and for sliding movement in the interior of the casing 1 for actuation of an electric contact 4 which is thereby pushed against the electric contact 5 placed below an ignition hot plate 6 to which it is firmly secured by means of a nut 28 screwed on a threaded stem 31.

The control knob 3 is returned to its inoperative position by a spring 11 located between the lower portion of the knob and a tubular reinforcement 9 arranged in its interior. The spring 11 is compressed by the control knob during the ignition phase and automatically returns to its inoperative position at the end of this phase.

The tubular reinforcement 9 arranged in the interior of the control knob 3 has a lower bent-off portion 10 for supporting the spring 11. At its upper end, the tubular reinforcement 9 likewise has a bent-off portion which bears against a step provided in the inner portion of control konb 3 for arresting the latter on its return stroke.

Further, a metal insert 13 is located in the inner portion of the reinforcement 9 and has spaced resilient blades 8 for resiliently connecting it, also comprising the receiving tubular inner end portion 7 for lighting the cigarette.

A tab 15 projects laterally from the cylindrical casing for locking a resilient sleeve 16 fitted on cylindrical casing 1. For locking sleeve 16 on cylindrical casing 1, a groove 19 on sleeve 16 is brought into alignment with tooth-shaped tab 15 and sleeve 16 is brought into alignment with tooth-shaped tab 15 and sleeve 16 is moved until it abuts against a stop 22 on cylindrical casing 1 and finally sleeve is given a slight rotation to the right or left. A pair of diametrically opposed stop lugs 17, 17' are provided on the outer surface of resilient sleeve 17 to abut against the edge of an instrument panel 18 and thus ensure fixing of the cylindrical casing 1 of the lighter on the instrument panel.

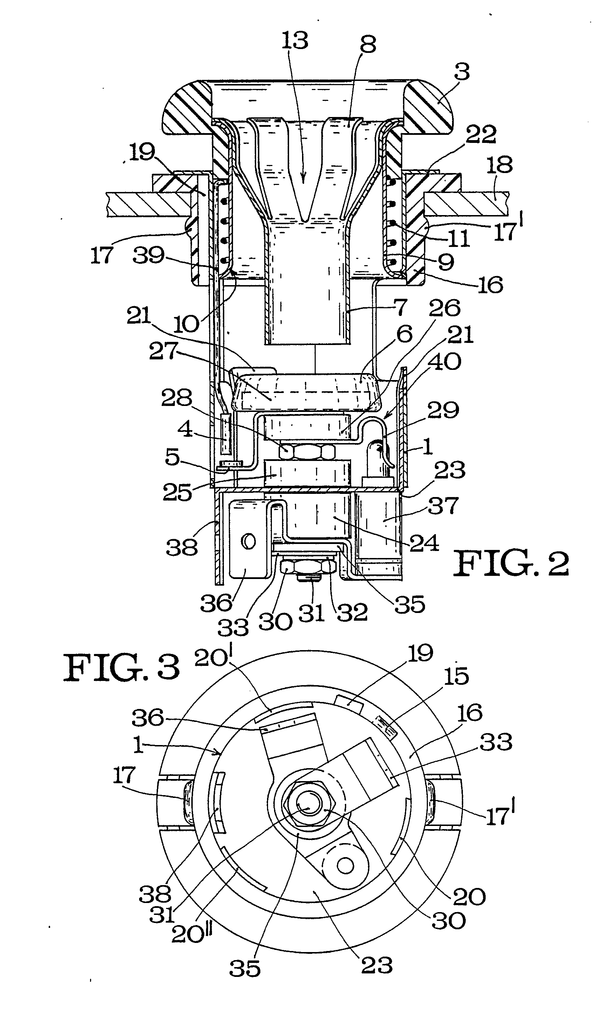

An ignition assembly 40 is indicated by an arrow in Fig. 2 and comprises a disk 23 from the circumference of which extend three equidistantly spaced resilient tabs 21 which are seam folded to the peripheral openings 20, 20', 20" as shown in Fig. 3.

Ceramic support members 24, 25, 26 are accommodated above and below the metal disk 23 and are retained in position by the threaded stem 31 which also serves for feeding power to an electric heating resistance 27. The threaded stem 31 in turn is connected to a contact blade 33.

The other end of the resistance 27 is connected to the contact 5 which is locked in position between the hot plate 6 and the ceramic support member 26.

A bimetal safety tongue 29 is secured by means of a nut 28 to the underside of the ceramic support member 26.

As the bimetal safety tongue 29 expands under the prolonged action of heat which may be caused by incidental locking or failure of the lighter, it establishes a contact to the cylindrical casing 1 which is connected to ground, thus producing a short circuit which melts the filament of a fuse installed on the motor vehicle and thus interrupts the feed of power to the lighter.

As the heating resistance 27 cools down, the bimetal safety tongue 29 will also shrink to its initial dimensions, thus eliminating the short circuit previously established and permitting the cause of the failure to be removed.

The contact blade 33 to which the positive feed pole is connected is secured to the lower portion of the support member 24 by means of a washer 32 and the nut 30 screwed onto the threaded stem 31. A mica washer 35 serving as an electric insulator is interposed between the contact blade 33 and a contact blade 36 carrying a LED 37.

The light emitting diode (LED) is incorporated in the interior of the lighter to permit the latter to be easily and rapidly identified by a passenger of the motor vehicle as such a diode is of small dimensions and thus can be easily accommodated within the narrow space available in the interior of such a lighter.

A contact blade 38 is firmly secured to the disk 23 to permit ground connection when the lighter is mounted on insulating support members.

The operation of the lighter according to the invention is as follows:

when the occupant of the motor vehicle wishes to light a cigarette, he or she depresses the control knob 3 which shifts the movable contact 4 connected thereto by means of a metal rod 39 mounted for sliding movement in a rib 41 bent out of the cylindrical casing 1. This manual actuation moves the contact 4 into electrical connection with the contact 5 and closes the electric circuit fed by the battery of the motor vehicle and thus produces the incandescence of the electric heating resistance 27.

To permit a cigarette or cigar to be more rapidly lit, the electric resistance of the electric heating element 27 has been reduced and selected to be between 1.5 and 2 Ohm instead of between 2.5 and 3.5 Ohm in conventional lighters of this type. Although this reduction affords a considerable economical advantage, it does not in the least impair the perfect operation of the lighter.

**Claims**

1. Electric device for rapidly lighting cigars or cigarettes, particularly for motor vehicles, comprising a control knob (3) for opening and closing the electric feed circuit of a heating resistance (27), said control knob (3) being mounted for sliding movement in the interior of a cylindrical metal casing (1), a circular reinforcement (9) arranged in the interior of said control knob (3), a spring (11) wound outwardly around said reinforcement (9), a metal insert (13) arranged inwardly of said circular reinforcement (9), a resilient sleeve (15) mounted outwardly on said cylindrical casing (1), an electric heating resistance (27) arranged in the interior of a hot plate (6), ceramic support members (24, 25, 26) inserted in a threaded stem (31) and locked in position thereby, a plurality of resilient tabs (21) firmly secured to a metal disk (23), and a LED (37), characterized by the fact that it further comprises a movable contact (4) mounted for sliding movement along a rib (41) bent out of said cylindrical metal casing (1), said movable contact (4) being formed by a metal rod (39) firmly secured with one end to said control knob (3) and forming a seat for said movable contact with its other end, and a further contact (5) connected to said electrical heating resistance (27) and arranged therebelow.

2. Electric device as claimed in claim 1, characterized by the fact that a bimetal safety tongue (29) is provided for protecting the lighter by short-circuiting it to ground.

3. A lighter as claimed in claim 1, wherein said electrical heating resistance (27) has a value of between 1.5 and 2 Ohm.

4. Electric device as claimed in claim 1, characterized by the fact that said electrical heating resistence is arranged to be fed by depressing said control knob (3) thus causing closing of the contacts (4, 5).

5. Electric device for rapidly lighting cigars or cigarettes, particularly for motor vehicles, substantially as described and illustrated and for the specified purposes.

II

3

22  18

16

17, 17'

15

7

39

41

1

21

4

1

5

37

23

24

33

38

36

II

35

# FIG.1

FIG. 2

FIG. 3